# EUROPEAN PATENT APPLICATION

(11) **EP 1 221 798 A2**
(43) Date of publication of application: **10.07.2002**
(21) Application number: 02075011.3
(22) Date of filing: 02.01.2002
(51) Int. Cl.: H04L 29/06, H04L 12/46

(54) **Packet processing method and engine**

(30) Priority: 03.01.2001 US 753400
(71) Applicant: PacketLight Networks Ltd., Kfar Saba 44641 (IL)
(72) Inventor: Mesh, Michael, Kfar Saba 44405 (IL); Porat, Yuval, Ramat Aviv 69058 (IL); Kollmann, Meir, Ra'anana 43272 (IL); Nachman, Yaron, Petach Tikva (IL)
(74) Representative: Mertens, Hans Victor

(57) **Abstract**

A method for packet processing for data transmission over an optical fiber, the method including the steps of segmenting an incoming bit stream, adding a tag to a header of each segment, each tag including data identifying a route between a source and a destination end-point of the bit stream, encapsulating the tagged segment into a Point-to-Point Protocol (PPP) packet, and mapping the encapsulated packet into a transmission frame (SONET/SDH or other) for transmission over an optical fiber.

## Description

### FIELD OF THE INVENTION

The present invention relates to fiber optic communication systems in general and, in particular, to a method and system for packet processing for transmission and receiving of data over an optical metro access communication system.

### BACKGROUND OF THE INVENTION

Access communication systems have become more widespread in recent years. These systems permit the transfer of information from one location to another, according to a variety of protocols, over different networks, most commonly the IP (Internet Protocol) network, the TDM (Time Division Multiplexing) network, and the ATM (Asynchronous Transmission Mode) network. Originally, data according to these protocols was transmitted over conventional copper telephone wires. Then, it was discovered that the data can be transmitted optically over optical fibers, which permit the transmission of significantly greater bandwidth than copper wires.

At present, data according to each protocol must be transmitted via its own network, and data at different bit rates must be transmitted separately, or processed before being transmitted simultaneously with other data rates and/or types over a higher bit rate medium. The TDM protocol, for example, provides synchronous transmission of data, generally voice, over a plurality of fixed time slots, using Time Division Multiplexing method. ATM, on the other hand, is asynchronous, and permits transmission of data and voice by inserting bits into ATM cells in a much more flexible arrangement. .In addition, in order to provide better use of bandwidth, statistical multiplexing can be used. Statistical multiplexing of different data types is done by dividing the data into small fixed-size cells, and bytes of different signals can be interleaved

IP routers, on the other hand, form a different type of network. The IP network is connection-less by its nature and uses variable-size packets It is possible to transmit IP over ATM, and ATM can be transmitted via TDM protocol, but at each stage, the data must be converted from one protocol to the other before transmission. This is both tune and resource consuming, and requires a large investment in equipment in locations where conversion is required in order to enter a larger network.

In order to increase the number of users on a given system, it has become important to increase the bandwidth of the transmissions, and/or to increase the speed of transmission, while taking into account the Quality of Service (QoS) provided to each customer. Thus, there are transmission networks which transmit at different bit rates, due to different network topologies. There are Wavelength Division Multiplexing (WDM) networks, where data is transmitted over wavelengths, each wavelength being associated with a different service. There are phone lines, which effectively combine a plurality of users on a single line, known as T1 and T3.

In the 1980's, the Synchronous Optical Network, known as SONET and, internationally, as SDH, was first defined, and then became the international standard. SONET is a standard for connecting fiber-optic transmission systems. SONET defines interface standards at the physical layer of the OSI seven-layer model. The standard defines a hierarchy of interface rates that allow data streams at different rates to be multiplexed. SONET establishes Optical Channel (OC) bit rate levels from 51.8 Mbps (about the same as a T3 line) to 2.48 Gbps. Prior rate standards used by different countries specified rates that were not compatible for multiplexing. With the implementation of SONET, communication carriers throughout the world can interconnect their existing digital carrier and fiber optic systems.

Yet another current solution is Dense Wavelength Division Multiplexing (DWDM). DWDM is an optical technology used to increase bandwidth over existing fiber optic backbones, DWDM works by combining and transmitting multiple signals simultaneously at different wavelengths on the same fiber. In effect, one fiber is transformed into multiple virtual fibers. One can multiplex sixteen OC-48 signals into one fiber, and increase the carrying capacity of that fiber from 2.5 Gb/s to 40 Gb/s. Currently, because of DWDM, single fibers are able to transmit data at speeds up to 400Gb/s. And, as vendors add more channels to each fiber, terabit capacity is on its way.

A key advantage to DWDM is that it is protocol and bit-rate independent. DWDM-based networks can transmit data in IP, ATM, SONET/SDH, and Ethernet, and handle bit-rates between 100 Mb/s and 10 Gb/s or more. Therefore, DWDM-based networks can carry different types of traffic at different speeds over an optical channel. From a certain point of view, DWDM-based networks create a lower cost way to quickly respond to customers' bandwidth demands and protocol changes. However, they are still limited in that data according to each separate protocol must be received in a central office and processed, in order to permit connection to a network. Furthermore, none of these systems takes advantage of the full capacity of optical fibers Also, the optical channel (wavelength) is not optimally used, since it carries only single data service,

Accordingly, there is a long felt need for a metro access communication system which optimizes the use of optical fibers, and it would be very desirable to have such a system which provides increased bandwidth but with reduced complexity in the overall communication system.

### SUMMARY OF THE INVENTION

The present invention provides a packet processing system which optimizes usage of the bandwidth capacity of optical fibers, and reduces the investment in equipment required at each local site in the network. This is accomplished by a novel method of organizing data to be transmitted in packets, This packet processing permits the transfer of data according to different protocols as is, without conversion from one protocol to another.

According to the present invention, there is provided a method for packet processing for data transmission, the method including the steps of segmenting an incoming bit stream, adding a tag to a header of each segment, each tag including data identifying the bit stream's route between source and destination end-points, and encapsulating the tagged segment into a Point-to-Point Protocol (PPP) packet in a frame. The standard used today and, therefore, the preferred frame at present, is a High bit rate Digital Link Control (HDLC)-like frame. Finally, the encapsulated PPP packet is mapped into a transmission frame for optical transmission. i.e., the encapsulated PPP packet is mapped into a Packet over SONET (or Packet over SDH) (PoS) for transmission.

Preferably, the encapsulated PPP packet is scrambled before the step of mapping into a transmission packet.

According to a preferred embodiment, the method further includes packet processing for received data including the steps of de-packing a packet, for example Packet over SONET/SDH packet, to retrieve an encapsulated PPP packet in a frame, for example, in HCLD-like form, de-capsulating the encapsulated PPP packet to retrieve a tagged segment of a bit stream, and stripping off the tag to retrieve the segment of a bit stream.

According to a preferred embodiment of the invention, the method further includes unscrambling a scrambled encapsulated PPP packet, after the step of de-packing.

According to one embodiment of the invention, the method further includes re-assembly of a plurality of segments of a bit stream in order to retrieve an original bit stream.

Further according to the present invention, there is provided an engine for packet processing and data transmission, the engine including a segmentation module for segmenting an incoming bit stream, a tagging module for adding a tag to a header of each segment, each tag including data identifying the bit stream's route between source and destination end-points, an encapsulating module for encapsulating the tagged segment into a Point-to-Point Protocol (PPP) packet in frame, and a mapping module for mapping the encapsulated packet into a transmission frame.

According to one embodiment, the frame includes a High bit rate Digital Link Control (HDLC)-like frame.

According to another embodiment, the transmission frame is a Packet over SONET/SDH (PoS) transmission frame.

### BRIEF DESCRIPTION OF THE DRAWINGS

The present invention will be further understood and appreciated from the following detailed description taken in conjunction with the drawings in which:
Figs. 1a, 1b and 1c schematically illustrate packet processing for transmission, according to one embodiment of the present invention;
Fig. 2 is a schematic illustration of further packet processing for transmission, according to one embodiment of the invention;
Fig. 3 is a schematic illustration of packet processing for receiving, according to one embodiment of the invention;
Figs. 4a, 4b and 4c schematically illustrate further packet processing for receiving, according to one embodiment of the present invention;
Fig. 5 is a block diagram illustration of an engine for packet processing according to one embodiment of the present invention; and
Fig. 6 is a schematic illustration of a packet format according to an alternative embodiment of the invention.

### DETAILED DESCRIPTION OF THE INVENTION

The present invention relates to a method for packet processing for transmission and receiving of data over an optical metro access communication system, and an engine for packet processing and data transmission. The method includes encapsulation of data, as is, in whatever protocol it is received, into a packet which looks and acts like a conventional Packet over SONET (PoS) packet, without requiring conversion of the data from one protocol to another.

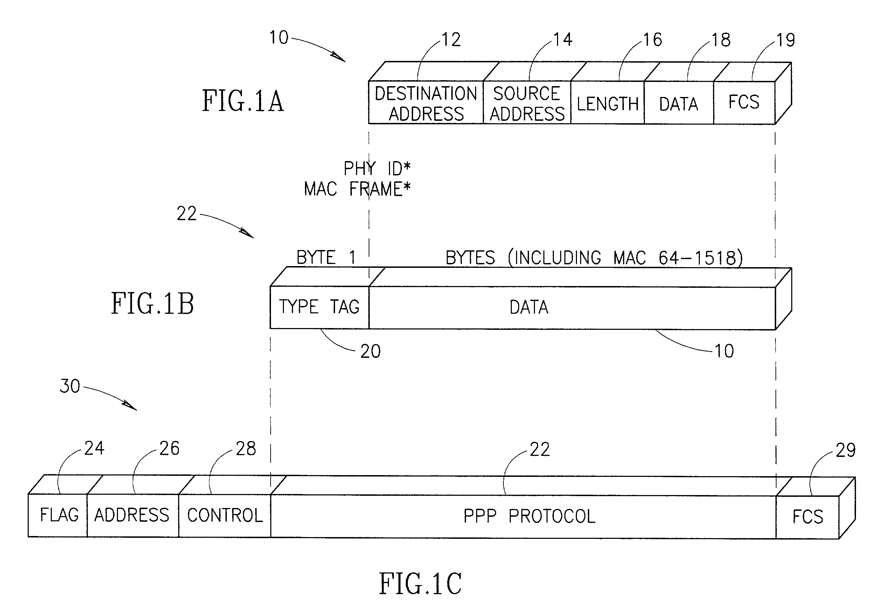

Referring now to Figs. 1a, 1b and 1c there are shown schematically the steps in the method of packet processing for transmission, according to one embodiment of the present invention, First of all, all incoming traffic, received on a service port, is segmented. This means that the incoming bit stream is segmented into variable-length segments. The segments can be of pre-determined fixed length for a particular kind of service or traffic, such as constant bit rate services, while the length of the segments for each service differs from one another. Alternatively, for other services, such as Ethernet, the segments can have variable length within the particular service, for example, the length of an Ethernet frame.

In Fig. 1a, there is shown, by way of non-limiting example only, an IEEE 802.3 Ethernet frame 10, which has been received for transmission. Ethernet frame 10 is a segment of a bit stream from a data source for transmission over the communication system. Ethernet frame 10 includes a destination address 12 within the Ethernet network, a source address 14 within the Ethernet network, information 16 representing the length of the frame, data 18 to be transmitted in the frame, and a frame correction signal (PCS) 19 to indicate the end of the segment. In most cases, Ethernet frame 10 will be only one of a plurality of frames, which, together, make up the entire data transmission.

A tag 20 is now added to the segment, as shown in Fig. 1b. As can be seen, during the rest of the packet processing procedure, the original segment, here the Ethernet frame 10, is regarded as a single block of data. Tag (or label) 20 includes information including the route between the traffic's source and destination end-points for directing the traffic from its origin to its end point. For constant bit rate (CBR) TDM services, timing information, such as a Residual Time Stamp (RTS), is preferably added in the Tag. The RTS generally includes the bit rate of the source data (the length of the bits and time between bits), so as to permit the receiver to correct any CBR timing errors occurring during transmission. For SONET signals, it may be preferable to transmit the Combus signals, which include, in addition to the data itself, also the envelope signal and the pointers of the data within the SONET frame payload, This helps in de-processing the SONET signal at the destination.

Next, as shown in Fig. 1c, the tagged segment 22 is encapsulated into a Point-to-Point Protocol (PPP) packet in a frame 30, preferably a High bit rate Digital Link Control (HDLC)-like frame. Frame 30 also includes a flag 24, to indicate the start of a transmission, source and destination address data 26 within the communication system, control parameters 28, and a frame correction signal (FCS) 29 to indicate the end of the transmission.

It will be appreciated that different services, whether PDH, Frame-Relay, Fibre Channel, SONET, (all of which are CBR services), or any other service which can be transmitted over optical fiber, have different internal construction, as required by the specific service. It is a particular feature of the present invention that the internal structure of the frame or segment is irrelevant, as far as encapsulation and packet processing according to the invention are concerned. Rather, every service segment is treated as a block or unit for purposes of encapsulation and transmission over the optical fiber, without regard to the content or form of the data, and without the need to convert from protocol to protocol.

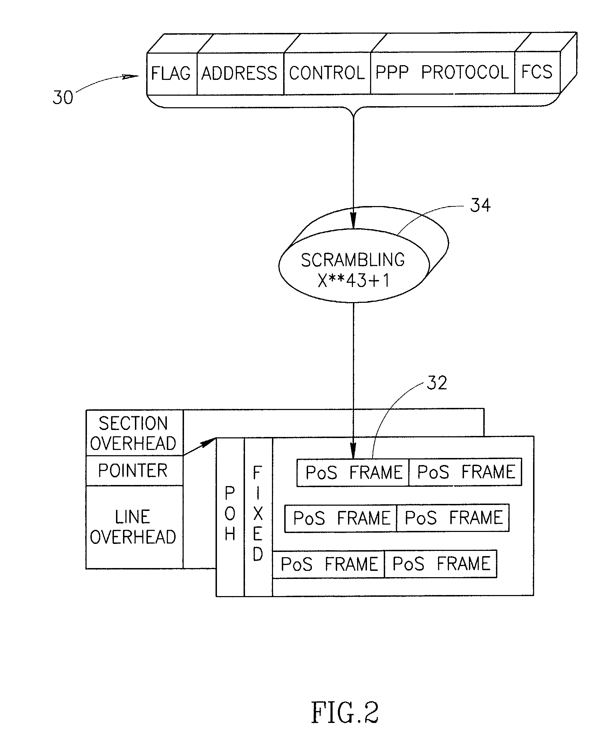

Referring now to Fig. 2, there is shown a schematic illustration of further packet processing for transmission, according to one embodiment of the invention. Here, the encapsulated segment, which is now HDLC-like frame 30, is mapped onto a payload, e.g., SONET OC-48c payload, as a transmission frame 32, preferably a Packet over SONET/SDH (PoS) frame, and then transported to its destination as if it were a conventional PoS packet or frame. According to a preferred embodiment, the encapsulated segment is scrambled 34, as known, before mapping onto transmission frames.

As stated above, it is a particular feature of the present invention, which is not possible with any conventional method or system, that various services according to differing protocols are processed in the same fashion by segmenting their bit streams and encapsulating the segments, without regard to content, with final transport as a seemingly-conventional PoS or similar transmission frame. In this way, there is no need to convert any data from one protocol to another in order to transport it over the system, and certainly not at the user end, as required in conventional systems.

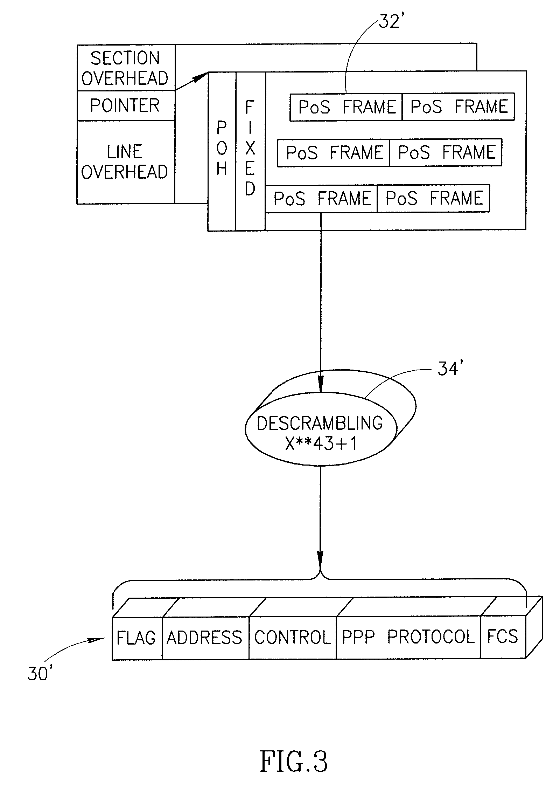

Fig. 3 is a schematic illustration of packet processing for a receiver, according to one embodiment of the invention. This processing is substantially the inverse of that illustrated in Fig. 2, Thus, each incoming transmission frame 32' (e.g., PoS frame) from a trunk port is first taken out of the SONET or other transmission payload (de-packing). If the packet was scrambled before mapping, it is now unscrambled 34'. The result is the encapsulated packet or segment (frame) 30',

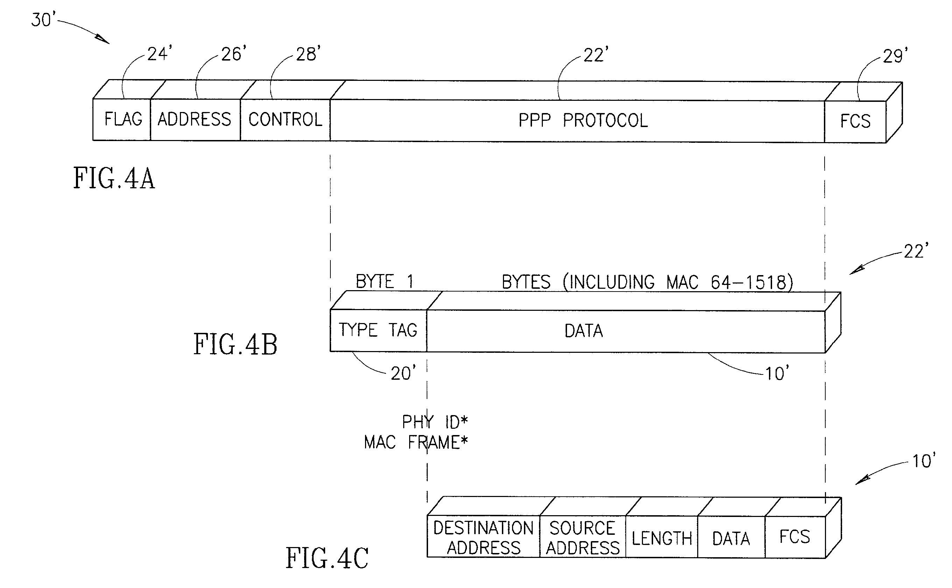

With reference to Fig. 4a, encapsulated PPP packet 30' is de-capsulated by removing the flag 24', address 26', control parameters 28', and FCS 29', The resulting tagged segment 22', shown in Fig. 4b, has its tag 20' stripped off, leaving the original segment, here shown as Ethernet frame 10'. All the segments 10' are reassembled, if necessary, and sent out through the appropriate destination Service port, as in conventional systems.

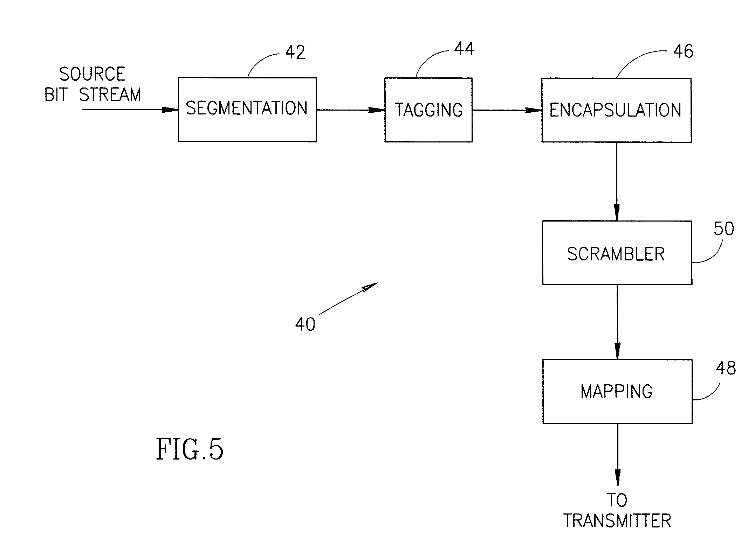

It will be appreciated by those skilled in the art that the method of the present invention can be carried out by means of any suitable hardware and software. Fig. 5 is a block diagram illustration of an engine 40 for packet processing according to one embodiment of the present invention. As can be seen, engine 40 includes a segmentation module 42 for segmenting an incoming bit stream, a tagging module 44 for adding a tag to a header of each segment, each tag including data identifying the route between the bit stream's source and destination end-points, an encapsulating module 46 for encapsulating the tagged segment into a Point-to-Point Protocol (PPP) packet in a frame, preferably a High bit rate Digital Link Control (HDLC)-like frame, and a mapping module 48 for mapping the encapsulated packet into a transmission frame, preferably a Packet over SONET/SDH (PoS) frame. Preferably, the engine also includes a scrambling module 50 between the encapsulating module 46 and the mapping module 48 for scrambling the encapsulated packet before mapping into a transmission frame.

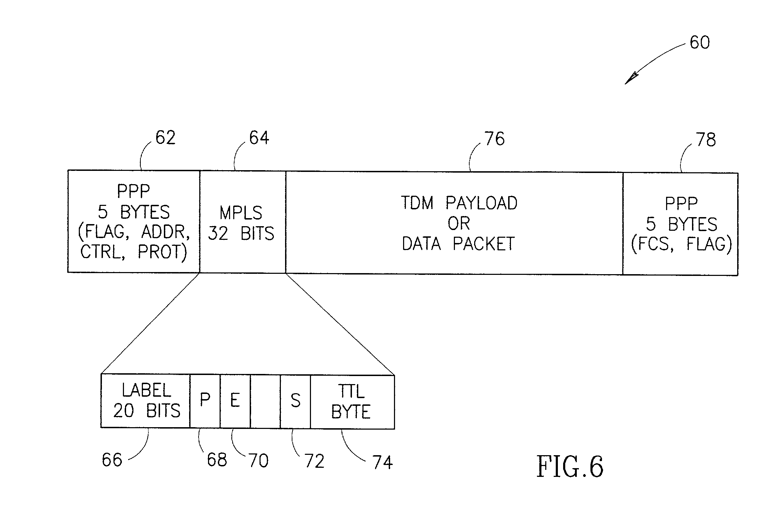

Instead of the tag described hereinabove, in order to provide a standard solution and to connect to networks which use MPLS (Multi-Protocol Label Switching) protocol, the tag can be based on MPLS. Fig. 6 is a schematic illustration of a packet format according to an alternate embodiment of the invention, including such an MPLS tag. Packet 60, shown in Fig. 6, includes PPP protocol information 62, which is a standard component of any PPP packet, PPP protocol information 62 is followed by an MPLS tag 64, which is composed of a label 66 indicating the route of the packet, a Protection bit 68, including priority indication, Extra-traffic bit 70. The tag also includes a Stack bit 72, and a TTL byte 74, as known in conventional MPLS tags. Next follows the TDM payload or data packet 76, depending upon the particular data to be transmitted, and finally, a PPP protocol closure 78, including FCS and a flag to indicate the end of the PPP packet, as known.

It will be appreciated that the invention is not limited to what has been described hereinabove merely by way of example. Rather, the invention is limited solely by the claims which follow.

## Claims

1. A method for packet processing for data transmission over an optical fiber, the method comprising the steps of:
segmenting an incoming bit stream;
adding a tag to a header of each segment, each tag including data identifying a route between a source and a destination end-point of the bit stream;
encapsulating said tagged segment into a Point-to-Point Protocol (PPP) packet in a frame; and
mapping the encapsulated packet into a transmission frame for transmission over an optical fiber.

2. The method according to claim 1, wherein said tagged segment is encapsulated into a PPP packet in a High bit rate Digital Link Control (HDLC)-like frame.

3. The method according to claim 1 or 2, wherein said transmission frame is a Packet over SONET/SDH (PoS) frame.

4. The method according to any of the preceding claims, further comprising the step of scrambling the encapsulated packet before the step of mapping into a transmission frame

5. The method according to any of the preceding claims, wherein said step of adding a tag includes adding an MPLS tag

6. The method according to any of the preceding claims, further comprising the steps of :
de-packing said transmission frame in a receiver to retrieve said encapsulated PPP packet;
de-capsulating said encapsulated PPP packet to retrieve said tagged segment of a bit stream;
stripping off the tag to retrieve said segment of a bit stream; and
assembling a plurality of said segments to re-create the original bit stream.

7. The method according to claim 6, further comprising the step of unscrambling a scrambled encapsulated PPP packet, after the step of de-packing.

8. The method according to claim 3, further comprising the steps of:
de-packing said Packet over SONET/SDH packet in a receiver to retrieve said encapsulated PPP packet in HDLC-like form;
de-capsulating said encapsulated PPP packet to retrieve said tagged segment of a bit stream;
stripping off the tag to retrieve said segment of a bit stream; and
assembling a plurality of said segments to re-create the original bit stream.

9. An engine for packet processing and data transmission, the engine comprising:
a segmentation module for segmenting an incoming bit stream;
a tagging module for adding a tag to a header of each segment, each tag including data identifying a route between a source and a destination end-point of said bit stream;
an encapsulating module for encapsulating the tagged segment into a Point-to-Point Protocol (PPP) packet in a frame; and
a mapping module for mapping the encapsulated packet into a transmission frame for transmission over an optical fiber.

10. The engine according to claim 9, wherein said PPP packet is encapsulated in a High bit rate Digital Link Control (HDLC)-like frame.

11. The engine according to claim 9 or 10 wherein said transmission frame is a Packet over SONET/SDH (PoS) frame.

12. The engine according to any of claims 9-11, wherein said tagging module is arranged to add an MPLS tag to a header of each segment.
